# FASCICULE DE BREVET EUROPEEN

(11) **EP 0 409 795 B1**
(45) Date de publication et mention de la délivrance du brevet: **06.10.1993**
(21) Numéro de dépôt: 90810565.3
(22) Date de dépôt: 20.07.1990
(51) Int. Cl.: F02N 17/047

(54) **Dispositif d'alimentation en carburant pour bougie à flamme pour moteur diesel et ensemble comprenant ces deux élements**
Kraftstoffzuführeinrichtung für Flammenzündkerzen für Dieselmotoren und Zusammenbau mit diesen zwei Bauteilen
Fuel supply device for flame spark plug for diesel engine and assembly with these two units

(30) Priorité: 21.07.1989 FR 8910029
(43) Date de publication de la demande: 23.01.1991
(73) Titulaire: A.I.C. SYSTEMS AG, CH-2540 Grenchen (CH)
(72) Inventeur: Moosmann, Rolf, CH-1164 Buchillon (CH)
(74) Mandataire: Nithardt, Roland

(56) Documents cités:
- DE-A- 2 743 134
- FR-A- 1 488 890
- GB-A- 2 131 483
- KRAFTFAHRZEUGTECHNISCHES TASCHENBUCH, R. BOSCH GMBH, 17. Aufl. 1970, S. 284-287

## Description

La présente invention concerne un dispositif d'alimentation en carburant pour bougie à flamme de démarrage à froid d'un moteur diesel à injection directe comportant une pompe à injection directe, un réservoir de carburant, un conduit d'alimentation de la pompe à injection reliant ce réservoir à cette pompe et un conduit de retour reliant la pompe au réservoir, ce dispositif comportant un corps dans lequel sont montés un clapet à ressort et une électrovanne connectée à un circuit d'alimentation de ladite bougie à flamme.

Sur les moteurs diesels à injection directe, on trouve maintenant de plus en plus fréquemment un dispositif de démarrage appelé bougie à flamme, qui facilite le démarrage à froid, et qui évite la fumée de gaz d'échappement provoquée par des hydrocarbures incomplètement brûlés au moment de la mise en route de ces moteurs. Ces systèmes, aussi connus sous la dénomination "FLAMMSTART" sont notamment commercialisés par la société suisse AIC-SYSTEMS AG.

La conduite de carburant diesel qui assure, au travers d'une valve électromagnétique, l'alimentation de la bougie à flamme, est branchée sur le circuit d'alimentation du moteur, entre le filtre principal et la pompe à injection. Dans ce circuit, la pression de carburant est déterminée par la soupape de décharge située sur la pompe à injection. Cette pression peut varier d'un type de moteur à l'autre, et se situe en général entre 0,7 et 2,7 bars. Sur certains moteurs, cette pression peut monter jusqu'à 4 bars.

Par la dimension de la buse calibrée faisant partie de la bougie à flamme, une adaptation à la pression de carburant disponible est possible, dans une certaine mesure, c'est-à-dire de 0,3 à 1,5 bar. Toutefois, la pression idéale pour le meilleur rendement de la bougie à flamme se situe entre 0,3 et 0,7 bar.

Pour obtenir cette pression, on propose deux solutions :
- soit de monter un circuit d'alimentation à part, avec une pompe électrique tarée à la pression voulue,
- soit de faire passer le retour de carburant après la soupape de décharge de la pompe à injection, au travers d'une autre soupape de retenue, celle-ci tarée à la pression voulue, et de brancher la conduite d'alimentation de la bougie à flamme entre la soupape de décharge de la pompe à injection et cette soupape de retenue.

Ces deux solutions demandent des pièces supplémentaires et compliquent le branchement du circuit d'alimentation.

L'art antérieur le plus proche est illustré par la demande de brevet britannique GB-A- 2 131 483 et par la demande de brevet français FR-A-1 488 890. Les réalisations correspondantes ne sont pas adaptées aux moteurs diesels modernes et présentent par ailleurs des défauts de base qui les rendent inutilisables dans la pratique. En particulier, le système décrit dans la publication française ne comporte pas de filtre pour le carburant qui alimente la bougie à flamme qui comporte habituellement un gicleur très fin. En outre, ce système présente un inconvénient majeur qui est le suivant : la bougie à flamme ne fonctionne que si la pression du carburant d'alimentation est comprise entre 0,3 et 0,7 bar. Cette pression est, par construction du système, la même que celle du carburant amené dans la pompe d'injection. Or au moment du démarrage, cette dernière devrait être beaucoup plus élevée. De ce fait, la réduction de pression nécessaire au fonctionnement de la bougie à flamme engendre un inconvénient grave au niveau de l'alimentation de la pompe d'injection en réduisant la pression de cette alimentation au moment où elle devrait être la plus élevée.

La présente invention se propose de résoudre ces problèmes et de supprimer les inconvénients de l'art antérieur en réalisant un dispositif d'alimentation en carburant pour bougie à flamme qui permet un fonctionnement optimal de ce dispositif en lui assurant l'alimentation en carburant par la pression la mieux adaptée, et qui remplace en même temps la soupape électromagnétique conventionnelle.

Dans ce but, le dispositif selon l'invention est caractérisé ce que ledit corps comporte un conduit d'entrée raccordé à un tronçon du conduit de retour connecté à ladite pompe à injection, et un premier conduit de sortie raccordé à un autre tronçon du conduit de retour connecté audit réservoir, en ce que ledit clapet à ressort est interposé entre ledit conduit d'entrée et ledit premier conduit de sortie, et en ce que ladite électrovanne est interposée entre un canal de dérivation connecté sur ledit conduit d' entrée et un second conduit de sortie raccordé audit circuit d'alimentation de la bougie à flamme.

Selon un mode de réalisation avantageux, le corps peut être réalisé d'une pièce et comprendre une partie inférieure traversée par un canal transversal définissant ledit conduit d'entrée et ledit premier conduit de sortie disposés dans le prolongement l'un de l'autre, et une partie supérieure contenant ladite électrovanne. Ledit canal transversal comporte de préférence une chambre dans laquelle est logé ledit clapet à ressort, cette chambre comprenant au moins un épaulement agencé pour servir d'appui audit clapet en vue d'obturer ledit canal.

De façon avantageuse, ledit canal de dérivation débouche dans une chambre contenant un organe d'obturation couplé à un noyau plongeur de l'électro-aimant et agencé pour obturer ou ouvrir l'entrée dudit deuxième conduit de sortie.

Selon un mode de réalisation particulier, ladite partie supérieure du corps contient ledit électro-aimant et ledit noyau plongeur est agencé pour se déplacer dans ladite chambre dans laquelle débouchent le canal de dérivation et ledit deuxième conduit de sortie.

La présente invention sera mieux comprise en référence à la description d'un exemple de réalisation et du dessin annexé dans lequel :
la fig. 1 représente une vue schématique du circuit d'alimentation d'un moteur diesel équipé du dispositif selon l'invention, et
la fig. 2 représente une vue en coupe axiale du dispositif selon l'invention.

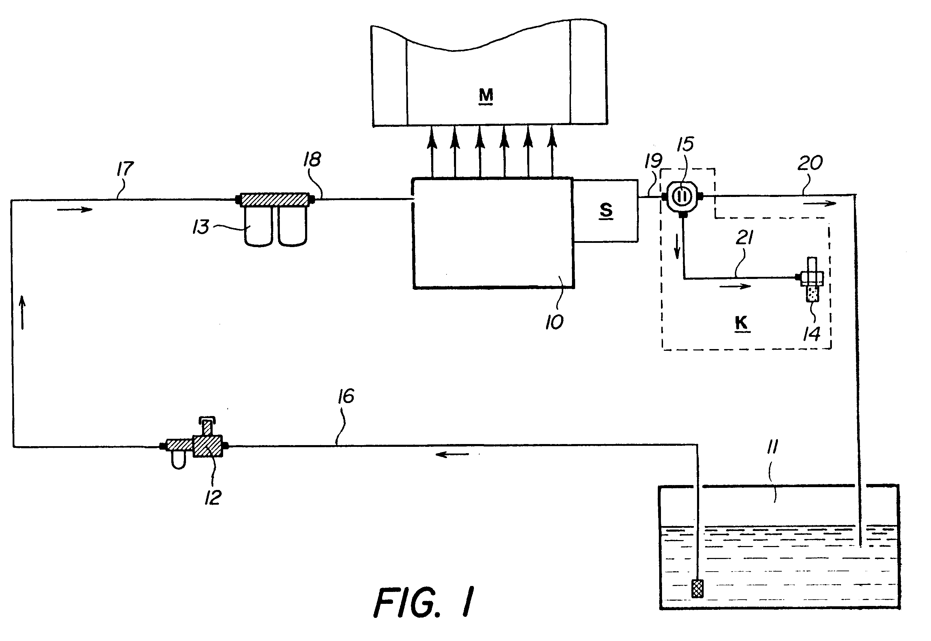

En référence à la fig. 1, le circuit d'alimentation d'un moteur diesel moderne M comporte une pompe à injection 10 équipée d'une soupape de décharge S, un réservoir 11 de carburant, une pompe d'alimentation 12, un filtre 13, une bougie à flamme 14 et un dispositif 15 d'alimentation de cette bougie, connectés entre eux par un conduit 16 reliant le réservoir 11 à l'entrée de la pompe d'alimentation 12, un conduit 17 qui relie la sortie de la pompe d'alimentation 12 à l'entrée du filtre fin 13, un conduit 18 qui relie ce filtre à la pompe à injection 10, un conduit 19 qui relie la sortie de la pompe à injection 10 après la soupape de décharge S à l'entrée du dispositif d'alimentation 15 de la bougie à flamme 14, un conduit de retour 20 qui relie le dispositif 15 au réservoir de carburant 11 et un conduit de dérivation 21 qui relie le dispositif d'alimentation 15 à la bougie à flamme 14.

Dans la réalisation illustrée par la figure 1 et qui correspond à l'application préférée, le circuit d'alimentation du moteur diesel M est tout à fait classique, à l'exception du dispositif 15. Ce dispositif a la particularité de pouvoir être monté en association avec la bougie à flamme 14 sur le conduit de retour 20 reliant la soupape de décharge S au réservoir de carburant 11 d'un moteur diesel traditionnel non équipé d'une bougie à flamme. De ce fait, le dispositif 15 et la bougie à flamme 14 peuvent être vendus comme un accessoire K pouvant être mis en place simplement sur le conduit 20 qui devra être sectionné en un endroit déterminé, les deux extrémités devenues libres devant être respectivement raccordées à l'entrée et à la sortie du dispositif 15. Grâce à cette réalisation, aucune transformation complexe n'est requise pour équiper un moteur diesel d'une bougie à flamme si ce moteur ne dispose pas de cet accessoire dès l'origine. Pour le constructeur, une standardisation des pièces, c'est-à-dire une rationalisation de sa production est rendue possible grâce au fait que la différence entre un moteur équipé d'une bougie à flamme et un moteur non équipé d'une telle bougie, se limite à l'adjonction du dispositif 15, tous les autres composants étant par ailleurs identiques.

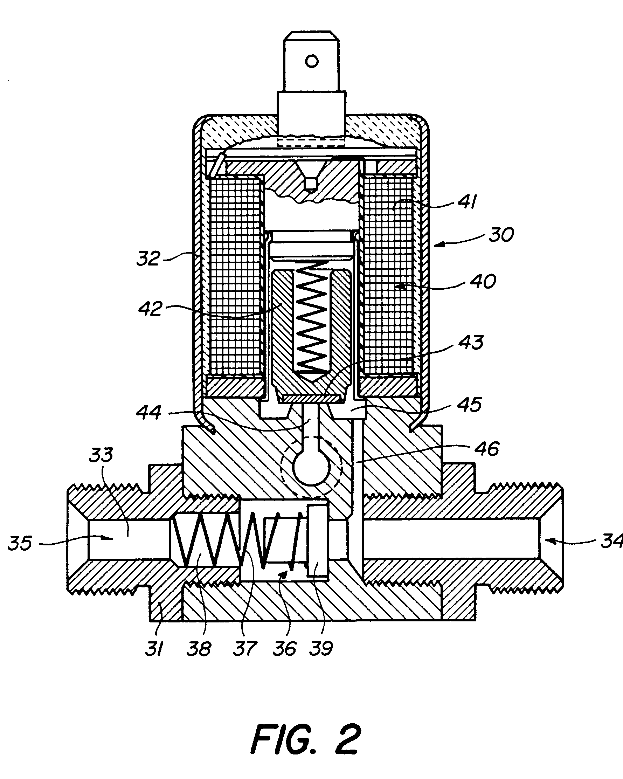

Le dispositif 15 est décrit plus en détail en référence à la fig. 2. Ce dispositif comporte un corps 30 composé d'un bloc comprenant une partie inférieure 31 et une partie supérieure 32. La partie inférieure 31 est traversée par un canal transversal 33 qui définit un conduit d'entrée 34 et un premier conduit de sortie 35. Le conduit d'entrée 34 et le premier conduit de sortie 35 sont couplés par l'intermédiaire d'un clapet 36 taré par un ressort 37. Le clapet 36 est en fait un organe d'obturation logé à l'intérieur d'une chambre 38 ménagée dans le canal 33 et comportant un épaulement 39 contre lequel cet organe d'obturation est sollicité par l'action du ressort de compression 37, dans le but de fermer l'accès au conduit de sortie 35 lorsque la pression du carburant dans le conduit d'entrée 34 est inférieure à une valeur prédéterminé par les caractéristiques du ressort 37.

La partie supérieure 32 du corps 30 contient une électro-vanne 40 comprenant essentiellement un électro-aimant 41 du type à noyau plongeur 42 portant à son extrémité inférieur un organe d'obturation 43. Cet organe d'obturation est agencé pour obturer un deuxième conduit de sortie 44 qui débouche dans une chambre 45 dans laquelle se déplace ledit noyau plongeur. La chambre 45 est reliée au conduit d'entrée 34 par l'intermédiaire d'un canal de dérivation ou canal de liaison 46. Le carburant se trouvant dans le canal de dérivation 46 et dans la chambre 45 est sensiblement à la même pression que celle du carburant se trouvant dans le conduit d'entrée 34. De ce fait, lorsque l'électro-aimant est activé et que l'organe d'obturation 43 permet une communication entre l'intérieur de la chambre 45 et le deuxième conduit de sortie 44, le carburant délivré par ce deuxième conduit de sortie se trouve sensiblement à la même pression que celle à laquelle il se trouve dans le conduit d'entrée 34. Il en résulte que la bougie à flamme est alimentée à la pression optimale, en fonction des caractéristiques du ressort 37 choisi, ce qui résout les problèmes évoqués précédemment et liés aux systèmes connus de l'art antérieur.

## Revendications

1. Dispositif d'alimentation en carburant pour bougie à flamme de démarrage à froid d'un moteur diesel à injection directe comportant une pompe à injection directe (10), un réservoir de carburant (11), un conduit d'alimentation (16) de la pompe à injection reliant ce réservoir à cette pompe et un conduit de retour reliant la pompe au réservoir, ce dispositif comportant un corps (30) dans lequel sont montés un clapet (36) à ressort (37) et une électrovanne (40) connectée à un circuit d'alimentation de ladite bougie à flamme, caractérisé en ce que ledit corps (30) comporte un conduit d'entrée (34) raccordé à un tronçon du conduit de retour connecté à ladite pompe à injection, et un premier conduit de sortie (35) raccordé à un autre tronçon du conduit de retour connecté audit réservoir, en ce que ledit clapet (36) à ressort (37) est interposé entre ledit conduit d'entrée (34) et ledit premier conduit de sortie (35), et en ce que ladite électrovanne (40) est interposée entre un canal de dérivation (46) connecté sur ledit conduit d'entrée (34) et un second conduit de sortie (44) raccordé audit circuit d'alimentation de la bougie à flamme.

2. Dispositif selon la revendication 1, caractérisé en ce que le corps (30) est réalisé d'une pièce et comprend une partie inférieure (31) traversée par un canal transversal (33) définissant ledit conduit d'entrée (34) et ledit premier conduit de sortie (35) disposés dans le prolongement l'un de l'autre, et une partie supérieure (32 contenant ladite électrovanne (40).

3. Dispositif selon la revendication 2, caractérisé en ce que ledit canal transversal (33) comporte un chambre (38) dans laquelle est logé ledit clapet (36) à ressort, et en ce que cette chambre comprend au moins un épaulement (39) agencé pour servir d'appui audit clapet en vue d'obturer ledit canal.

4. Dispositif selon la revendication 1, caractérisé en ce que ledit canal de dérivation (46) débouche dans une chambre (45) contenant un organe d'obturation couplé à un noyau plongeur (42) de l'électro-aimant (41) et agencé pour obturer ou ouvrir l'entrée dudit second conduit de sortie (44).

5. Dispositif selon la revendication 4, caractérisé en ce que ladite partie supérieure (32) du corps contient ledit électro-aimant (41) et en ce que ledit noyau plongeur (42) est agencé pour se déplacer dans ladite chambre (45) dans laquelle débouchent le canal de dérivation (46) et ledit second conduit de sortie (44).

## Patentansprüche

1. Kraftstoffzuführeinrichtung für Flammenzündkerzen zum Kaltstarten eines Dieselmotores mit Direkteinspritzung, die folgendes aufweist: eine Pumpe (10) zur Direkteinspritzung, einen Kraftstofftank (11), eine Zuführleitung (16) zur Einspritzpumpe, die diesen Tank mit dieser Pumpe verbindet und eine Rückführleitung zwischen der Pumpe und dem Tank, wobei diese Einrichtung ein Gehäuse (30) aufweist, in welchem ein Rückschlagventil (36) mit Feder (37) und ein mit der Zuführleitung zu der Flammenzündkerze verbundenes Magnetventil (40) eingebaut ist,
**dadurch gekennzeichnet**, daß
das Gehäuse (30) einen Zulaufanschluß (34) aufweist, der mit einem Ende der an der Einspritzpumpe angeschlossenen Rücklaufleitung verbunden ist und einen ersten Ablaufanschluß (35), der mit dem Ende einer weiteren, am Tank angeschlossenen Rücklaufleitung verbunden ist, daß das Rückschlagventil (36) mit Feder (37) zwischen dem Zulaufanschluß (34) und dem ersten Ablaufanschluß (35) eingebaut ist, und daß das Magnetventil (40) zwischen einem am Zulaufanschluß (34) beginnenden Bypass (46) und einem mit der Versorgungsleitung für die Flammenzündkerze verbundenen zweiten Ablaufanschluß (44) eingebaut ist.

2. Einrichtung nach Anspruch 1,
**dadurch gekennzeichnet**, daß
das Gehäuse (30) aus einem Stück gefertigt ist und eine untere Partie (31) aufweist, durch welche ein Querkanal (33) verläuft, der, in gegenseitiger Verlängerung angeordnet, den Zulaufanschluß (34) und den ersten Ablaufanschluß (35) bildet, und eine obere Partie (32), welche das Magnetventil (40) enthält.

3. Einrichtung nach Anspruch 2,
**dadurch gekennzeichnet**, daß
der Querkanal (33) einen Raum (38) aufweist, in welchem das Rückschlagventil (36) mit Feder untergebracht ist, und daß dieser Raum mindestens einen Absatz (39) aufweist, der als Anschlag für das Rückschlagventil dient, um den Kanal abzusperren.

4. Einrichtung nach Anspruch 1,
**dadurch gekennzeichnet**, daß
der Bypass (46) in einen Raum bzw. eine Kammer (45) mündet, der ein mit einem Tauchanker (42) des Elektromagneten (41) verbundenes Absperrorgan enthält, das dazu dient, den Zulauf zum zweiten Ablaufanschluß (44) zu schließen oder zu öffnen.

5. Einrichtung nach Anspruch 4,
**dadurch gekennzeichnet**, daß
die obere Partie (32) des Gehäuses den Elektromagneten (41) enthält, und daß der Tauchanker (42) so angeordnet ist, daß er sich in der Kammer (45) verschiebt, in die der Bypass (46) und der zweite Ablauf (44) münden.

## Claims

1. A fuel supply device for a cold start flame spark plug for a direct diesel injection engine comprising a direct injection pump (10), a fuel tank (11), a supply line (16) for the injection pump connecting this tank to this pump and a return line connecting the pump to the tank, this device comprising a body (30) in which are mounted a spring-loaded (37) valve (36) and a solenoid-operated valve (40) connected to a supply circuit of said flame spark plug,
**characterised in that** said body (30) comprises an inlet line (34) connected to a section of the return line connected to said injection pump, and a first outlet line (35) connected to another section of the return line connected to said tank,
**in that** said spring-loaded (37) valve (36) is inserted between said inlet line (34) and said first outlet line (35),
**and in that** said solenoid-operated valve (40) is inserted between a bypass channel (46) connected on said inlet line (34) and a second outlet line (44) connected to said supply circuit of the flame spark plug.

2. A device according to Claim 1,
**characterised in that** the body (30) is made in one piece and comprises a lower part (31) through which pass a transversal channel (33) defining said inlet line (34) and said first outlet line (35) disposed in the extension of one another, and an upper part (32) containing said solenoid-operated valve (40).

3. A device according to Claim 2,
**characterised in that** said transversal channel (33) comprises a chamber (38) in which is housed said spring-loaded valve (36),
**and in that** this chamber comprises at least one collar (39) designed to serve as a support for said valve in order to blank off said channel.

4. A device according to Claim 1,
**characterised in that** said bypass channel (46) opens into a chamber (45) containing a blanking-off member coupled to a solenoid plunger (42) of the electromagnet (41) and designed to blank off or open the inlet to said second outlet line (44).

5. A device according to Claim 4,
**characterised in that** said upper part (32) of the body contains said electromagnet (41),
**and in that** said solenoid plunger (42) is designed to move in said chamber (45) into which open the bypass channel (46) and said second outlet line (44).
